# EUROPÄISCHE PATENTANMELDUNG

(11) **EP 1 714 761 A2**
(43) Veröffentlichungstag der Anmeldung: **25.10.2006**
(21) Anmeldenummer: 05026548.7
(22) Anmeldetag: 06.12.2005
(51) Int. Cl.: B29B 13/02, H05B 3/00, B29C 51/42

(54) **Heizvorrichtung**

(30) Priorität: 21.04.2005 DE 102005018652
(71) Anmelder: UHLMANN PAC-SYSTEME GmbH & Co. KG, 88471 Laupheim (DE)
(72) Erfinder: Gertitschke, Detlev, Dipl.-Ing., 88471 Laupheim (DE)
(74) Vertreter: Hentrich, Swen

(57) **Zusammenfassung**

Die Erfindung betrifft eine Heizvorrichtung für die Erwärmung flächig ausgedehnter Gebilde (2), mit einer Mehrzahl benachbart zu dem Gebilde (2) angeordneten Wärmequellen (4). Die Wärmequellen (4) sind regelmäßig auf den Gitterplätzen eines Gitters (5) angeordnet, wobei jede der Wärmequellen (4) über eine Schaltleitung (8) mit einer Schalteinheit (9) zum flexiblen Schalten des Betriebszustandes unabhängig von den anderen Wärmequellen (4) verbunden ist.

## Beschreibung

Die Erfindung betrifft eine Heizvorrichtung für die Erwärmung flächig ausgedehnter Gebilde, wie thermoplastischer Folien, Platten oder dergleichen, mit einer Mehrzahl benachbart zu dem Gebilde angeordneten Wärmequellen.

Derartige Heizvorrichtungen werden beispielsweise in Thermoformmaschinen eingesetzt, um die von einer Vorratsrolle durch die einzelnen Stationen der Thermoformmaschine transportierte Thermoformfolie auf die Bearbeitungstemperatur in einer Formstation oder Siegelstation zu erwärmen. Entsprechend einer getakteten oder kontinuierlichen Arbeitsweise der Thermoformmaschine sind Heizvorrichtungen erforderlich, die gleichfalls getaktet oder kontinuierlich arbeiten können, also entsprechend getaktet oder kontinuierlich die zu erwärmenden Gebilde aufheizen. Bekannt ist es dabei, Kontaktheizplatten einzusetzen, die einseitig oder beidseitig dem Gebilde angelegt werden, oder für eine kontaktlose Arbeitsweise Strahlerheizungen einzusetzen, die den Wärmeeintrag im wesentlichen nicht durch Wärmeleitung sondern durch Wärmestrahlung bewirken. Da bei diesen bekannten Heizvorrichtungen stets ein bestimmter, vorgegebener Bereich erwärmt wird, der sich aus den geometrischen Abmessungen der Heizvorrichtung ergibt, ist diese als ein Formatteil zu betrachten, das bei Formatänderungen, also bei Änderungen der Abmessungen des zu erwärmenden Gebildes, mit hohen Kosten ausgewechselt werden muss. Alternativ besteht auch die Möglichkeit, entsprechende Heizvorrichtung formatneutral auszulegen, also den Wärmeeintrag in die größte zu erwärmende Fläche vorzusehen und in Kauf zu nehmen, dass bei Gebilden kleinerer Abmessungen Wärmeenergie neben das Gebilde übertragen und damit im Ergebnis verschwendet wird.

Der Erfindung liegt daher die Aufgabe zugrunde, eine Heizvorrichtung der eingangs genannten Art so auszubilden, dass diese bei geringem mechanischen Aufwand und geringen Kosten für Formatwechseln flexibel auf unterschiedliche Abmessungen des zu erwärmenden Gebildes abgestimmt werden kann.

Diese Aufgabe wird nach der Erfindung dadurch gelöst, dass die Wärmequellen regelmäßig auf den Gitterplätzen eines Gitters angeordnet sind, und daß jede der Wärmequellen über eine Schaltleitung mit einer Schalteinheit zum flexiblen Schalten des Betriebszustandes unabhängig von den anderen Wärmequellen verbunden ist.

Mit dieser Gestaltung ist der Vorteil verbunden, dass in der Heizvorrichtung eine Fläche bestimmt werden kann, die mit der Größe des zu erwärmenden Gebildes korreliert und für die Erwärmung des konkret vorliegenden Gebildes eingesetzt wird, während Wärmequellen, die ohne Einwirkungsmöglichkeit auf das Gebilde sind, nicht eingeschaltet werden und so weder zu einer Energieverschwendung beitragen noch thermische Störeffekte erzeugen. Zu beachten ist weiterhin, dass diese Heizvorrichtung sowohl mit getaktet als auch kontinuierlich arbeitenden Maschinen kombiniert werden kann, wobei sich diese Vorrichtung durch eine besonders leise Arbeitsweise auszeichnet, weil keine mechanischen Verstellungen erforderlich sind, die durch Antriebe oder Anschläge kontrolliert werden müssen.

Ganz besonders bevorzugt ist es im Rahmen der Erfindung, wenn die Wärmequellen durch Heizstrahler gebildet sind. Vorgesehen ist weiterhin, dass die Heizstrahler als Punktstrahler ausgeführt sind, bei denen also im wesentlichen die Wärmeabstrahlung von einem Punkt ausgeht und damit geometrisch einfache Verhältnisse vorliegen, bei denen keine wärmeabstrahlenden Flächen berücksichtigt werden müssen insbesondere in ihrer Interaktion mit der Abstrahlung benachbarter Wärmequellen.

Da aber auch bei einer punktförmigen Abstrahlung von Wärmeenergie in einem gegebenen Abstand von dem Punktstrahler eine kreisrunde Fläche bestrahlt wird, ist gemäß der Erfindung vorgesehen, dass vor jedem der Heizstrahler eine Blende mit rechteckiger Blendenöffnung angeordnet ist, um so eine lückenlose Erwärmung des Gebildes ohne Heizlücken und insbesondere auch ohne Überlappungen benachbarter Kreise zu erreichen.

Ganz besonders bevorzugt im Rahmen der Erfindung ist es, wenn mehrere benachbarte Wärmequellen zu Gruppen zusammengefasst sind zum gruppenweisen Schalten durch die Schalteinheit. Bei dieser Ausführungsform kann gezielt zu den Abmessungen des Gebildes eine Gruppe von Wärmequellen zusammengefasst werden, so dass die Aufgabe der Schalteinheit zum Schalten zwischen den Betriebszuständen vereinfacht ist, da nicht viele Wärmequellen unabhängig voneinander verwaltet werden müssen.

Um einen einfachen konstruktiven Aufbau zu erhalten, sind die Wärmequellen auf einer Trägerplatte als Heizplatte angeordnet. Daher besteht als einfachste Ausführung die Möglichkeit, dass die Heizplatte plan gestaltet ist, was sich insbesondere anbietet, wenn auch das zu erwärmende Gebilde plan der Heizvorrichtung zugeführt wird. Darüber hinaus besteht aber auch wegen der Vielzahl von eingesetzten Wärmequellen, die mit gegenseitigem Abstand angeordnet sind, die Möglichkeit, dass die Heizplatte gekrümmt gestaltet ist, woraus sich eine Vielzahl weiterer Anwendungsmöglichkeiten für die Heizvorrichtung und für deren Positionierungen in einem größeren Maschinenumfeld ergibt.

Gleichfalls hinsichtlich der Einfachheit des Aufbaus bevorzugt ist eine Ausführungsform, bei der die Schaltleitungen durch die Leitungen zur Spannungsversorgung der Wärmequellen gebildet sind.

Im folgenden wird die Erfindung an einem in der Zeichnung dargestellten Ausführungsbeispiel näher erläutet; es zeigen:

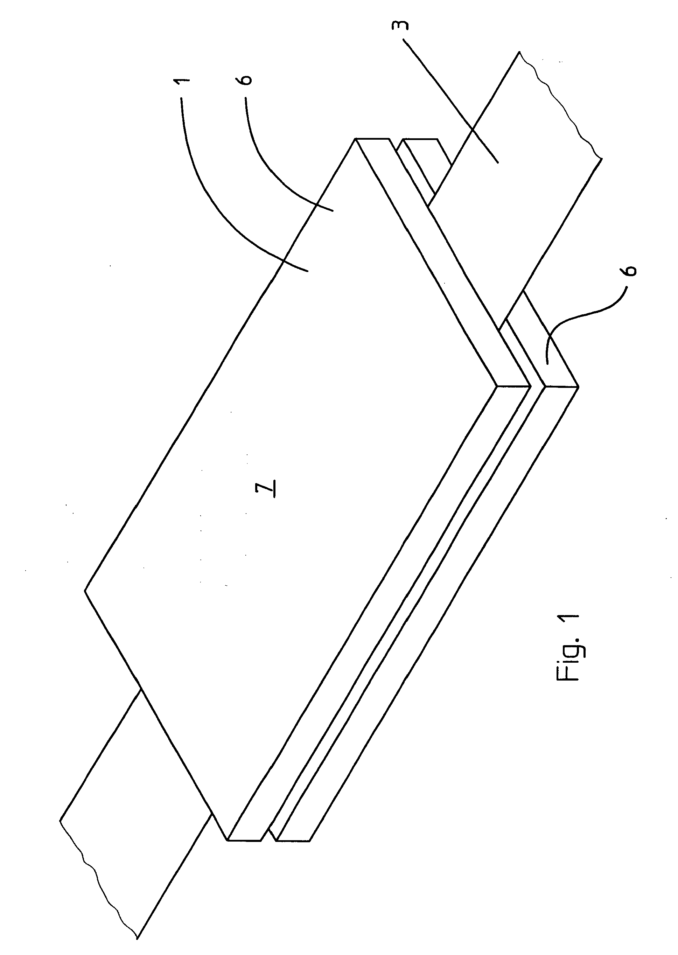

- Fig. 1: eine schematische perspektivische Darstellung der erfindungsgemäßen Heizvorrichtung,
- Fig. 2: eine Draufsicht auf die die Wärmequellen auf den Gitterplätzen eines Gitters tragende Heizplatte, und
- Fig. 3: eine schematische Darstellung einer Mehrzahl zu einer Gruppe zusammengefasster Wärmequellen.

In der Zeichnung ist eine Heizvorrichtung 1 gezeigt, die für die Erwärmung flächig ausgedehnter Gebilde 2 vorgesehen ist, wie diese beispielsweise durch thermoplastisch verformbare Folien 3 gegeben sind, die in einer in der Zeichnung nicht dargestellten Thermoformmaschine der Heizvorrichtung 1 zugeführt werden, um eine Erwärmung auf auf die Verformtemperatur zu erreichen. Weiterhin besteht auch die Möglichkeit, eine derartige Heizvorrichtung 1 vor der Siegelstation der Thermoformmaschine einzusetzen. Es ist darauf hinzuweisen, dass die Verwendung einer derartigen Heizvorrichtung 1 jedoch nicht auf den Einsatz in Thermoformmaschinen mit der Erwärmung thermoplastischer Folien 3 beschränkt ist, sondern auch Platten oder andere flächig ausgedehnte Gebilde 2 erwärmt werden können.

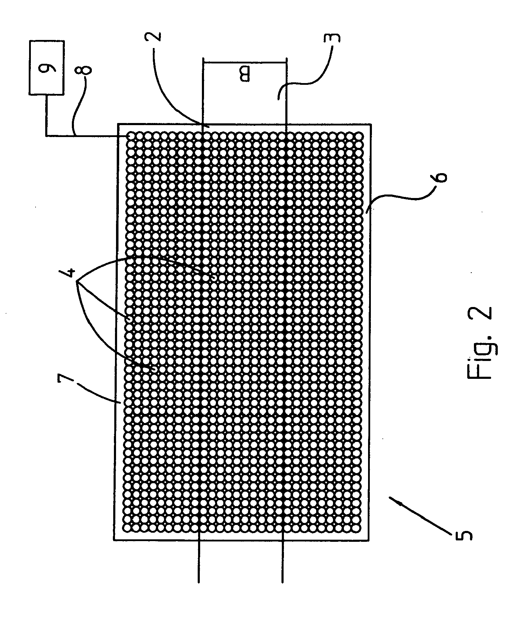

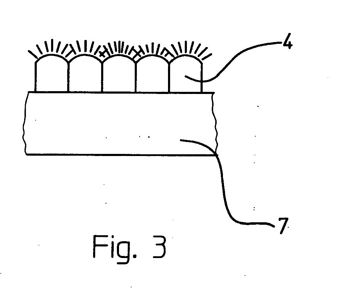

Diese Heizvorrichtung 1 weist eine Mehrzahl benachbart zu dem Gebilde 2 angeordneter Wärmequellen 4 auf, wobei die Wärmequellen 4 gemäß der Erfindung regelmäßig auf den Gitterplätzen eines fiktiven Gitters 5 angeordnet sind. Jede der Wärmequellen 4 ist über eine Schaltleitung 8 mit einer Schalteinheit 9 zum flexiblen Schalten des Betriebszustandes unabhängig von den anderen Wärmequellen 4 verbunden, wobei die Schaltleitungen 8 durch die Leitungen zur Spannungsversorgung der Wärmequellen 4 gebildet sind. Durch diese Gestaltung ergibt sich die vorteilhaft Möglichkeit, dass abhängig von der Fläche und den Abmessungen des zu erwärmenden Gebildes 2 die aktive Fläche der Heizvorrichtung 1 festgelegt werden kann, die zur Erwärmung des Gebildes 2 eingesetzt wird. In der Heizvorrichtung 1 sind die Wärmequellen 4 auf einer Trägerplatte als Heizplatte 7 angeordnet, die zweifach vorgesehen und beidseits des Gebildes 2 eingesetzt sein kann.Im Ausführungsbeispiel sind die Wärmequellen 4 durch als Punktstrahler wirkende NIR-Heizstrahler gebildet. In dem gezeigten Ausführungsbeispiel ist weiterhin die Heizplatte 7 plan gestaltet, wobei aber der grundsätzliche Aufbau der Heizvorrichtung 1 auch eine Gestaltung zulässt, bei der die Heizplatte 7 gekrümmt oder flexibel ausgeführt ist. Figuren 2 und 3 zeigen schematisch den Anwendungsfall mit einem Gebilde 2, dessen Breite geringer als die Breite der Heizplatte 7 ist. Um dabei den Einsatz von Wärmequellen 4 zu vermeiden, die nicht effektiv zur Erwärmung des Gebildes 2 beitragen können, sind die unmittelbar oberhalb und unterhalb des Gebildes 2 angeordneten Wärmequellen 4 zu einer Gruppe zusammengefasst, die synchron durch die Schalteinheit 9 geschaltet werden, während die außerhalb des Gebildes 2 angeordneten Wärmequellen 4 im ausgeschalteten Betriebszustand verharren.

## Patentansprüche

1. Heizvorrichtung für die Erwärmung flächig ausgedehnter Gebilde (2), wie thermoplastischer Folien (3), Platten oder dergl., mit einer Mehrzahl benachbart zu dem Gebilde (2) angeordneten Wärmequellen (4), **dadurch gekennzeichnet, daß** die Wärmequellen (4) regelmäßig auf den Gitterplätzen eines Gitters (5) angeordnet sind, und daß jede der Wärmequellen (4) über eine Schaltleitung (8) mit einer Schalteinheit (9) zum flexiblen Schalten des Betriebszustandes unabhängig von den anderen Wärmequellen (4) verbunden ist.

2. Heizvorrichtung nach Anspruch 1, **dadurch gekennzeichnet, daß** die Wärmequellen (4) durch Heizstrahler gebildet sind.

3. Heizvorrichtung nach Anspruch 2, **dadurch gekennzeichnet, daß** die Heizstrahler als Punktstrahler ausgeführt sind.

4. Heizvorrichtung nach Anspruch 2 oder 3, **dadurch gekennzeichnet, daß** vor jedem der Heizstrahler eine Blende mit rechteckiger Blendenöffnung angeordnet ist.

5. Heizvorrichtung nach einem der Ansprüche 1 bis 4, **dadurch gekennzeichnet, daß** mehrere benachbarte Wärmequellen (4) zu Gruppen zusammengefaßt sind zum gruppenweisen Schalten durch die Schalteinheit.

6. Heizvorrichtung nach einem der Ansprüche 1 bis 5, **dadurch gekennzeichnet, daß** die Wärmequellen (4) auf einer Trägerplatte als Heizplatte (7) angeordnet sind.

7. Heizvorrichtung nach Anspruch 6, **dadurch gekennzeichnet, daß** die Heizplatte (7) plan gestaltet ist.

8. Heizvorrichtung nach Anspruch 6, **dadurch gekennzeichnet, daß** die Heizplatte (7) gekrümmt gestaltet ist.

9. Heizvorrichtung nach einem der Ansprüche 1 bis 8, **dadurch gekennzeichnet, daß** die Schaltleitungen (8) durch die Leitungen zur Spannungsversorgung der Wärmequellen (4) gebildet sind.
